# EUROPÄISCHE PATENTANMELDUNG

(11) **EP 4 488 197 A1**
(43) Veröffentlichungstag der Anmeldung: **08.01.2025**
(21) Anmeldenummer: 24181844.2
(22) Anmeldetag: 13.06.2024
(51) Int. Cl.: B65F 3/00, B60R 3/02

(54) **TRITTBRETT UND VERFAHREN ZUM JUSTIEREN EINES TRITTBRETTS**

(30) Priorität: 30.06.2023 DE 102023117364
(71) Anmelder: FAUN Umwelttechnik GmbH & Co. KG, 27711 Osterholz-Scharmbeck (DE)
(72) Erfinder: Kot, Radoslaw, 55-220 Jelcz-Laskowice (PL); Palka, Maciej, 55-095 Dlugoleka (PL)
(74) Vertreter: Regler, Markus Egid

(57) **Zusammenfassung**

Die Erfindung betrifft Trittbrett (1), insbesondere für ein Abfallsammelfahrzeug, mit einem Halter (2) und einem beweglichen Teil (3) mit einer Plattform (4), wobei der bewegliche Teil (3) in eine geschlossene, eine offene und eine besetzte Position bringbar ist, indem der bewegliche Teil (3) gegenüber dem Halter (2) schwenkbar ist, wobei ein erstes Federelement (9) vorgesehen ist, mit dem der bewegliche Teil (3) in der offenen Position mittelbar oder unmittelbar in Anlage kommt. Dadurch sind die Positionen des Trittbretts (1) präzise einstellbar und bestimmbar.

Weiterhin betrifft die Erfindung ein Verfahren zum Justieren eines solchen Trittbretts (1), wobei der beweglichen Teil (3) an dem Halter (2) angebracht wird, das erste Federelement (9) angebracht wird, so dass das erste Federelement (9) auf eine vorgesehene Anfangslänge L_{A} eingestellt wird, ein Winkelbereich α überprüft wird, um den die Plattform (4) bei einer vorgesehenen Belastung zwischen der offenen und der besetzten Position schwenkt und die Länge L des ersten Federelements (9) nachjustiert wird, so dass bei einer vorgesehenen Belastung der Plattform (4) der bewegliche Teil (3) um einen vorgegebenen Winkelbereich α schwenkt.

## Beschreibung

Die Erfindung betrifft ein Trittbrett, insbesondere für ein Abfallsammelfahrzeug, mit einem Halter und einem beweglichen Teil mit einer Plattform, wobei der bewegliche Teil in eine geschlossene, eine offene und eine besetzte Position bringbar ist, indem der bewegliche Teil gegenüber dem Halter schwenkbar ist.

Im Bereich der Nutzfahrzeuge, insbesondere im Bereich der Abfallsammelfahrzeuge, ist die Sicherheit des Bedienpersonals von großer Wichtigkeit. So verfügen Abfallsammelfahrzeuge über zumeist heckseitig angeordnete Trittbretter, auf denen das Bedienpersonal während des Entsorgungsbetriebs mitfahren kann. Ist eines oder mehrere der Trittbretter besetzt, so ist dies mit Restriktionen im Fahrbetrieb des Abfallsammelfahrzeugs verbunden, beispielsweise darf die Vorwärtsfahrt nur mit einer vorgegebenen Maximalgeschwindigkeit erfolgen, während die Rückwärtsfahrt vollständig blockiert sein muss.

In der DE 10 2006 023 501 B3 wird ein Trittbrett offenbart, bei dem in der besetzten Position des Trittbretts ein Schalter betätigt wird, so dass dieser Zustand des Trittbretts erkannt wird. Schalteranordnungen sind anfällig für Verschmutzung und Verschleiß und auch für Manipulation. Die Position des Trittbretts mittels eines Drehwinkelgebers zu bestimmen, bietet dem gegenüber Vorteile. Dazu ist es notwendig, dass präzise bestimmt werden kann, ob das Trittbrett besetzt oder unbesetzt ist. Mit anderen Worten müssen die besetzte und unbesetzte Position des Trittbretts genau eingestellt werden.

Es ist daher die Aufgabe der vorliegenden Erfindung ein Trittbrett und ein Verfahren zum Justieren des Trittbretts vorzuschlagen, mit dem die besetzte und unbesetzte Position des Trittbretts genau eingestellt und bestimmt werden kann. Die Aufgabe wird gelöst durch ein Trittbrett mit den Merkmalen des Patentanspruchs 1 sowie durch ein Verfahren mit den Merkmalen des Patentanspruchs 13. Vorteilhafte Ausgestaltungen der Erfindung sind Gegenstand der abhängigen Ansprüche.

Die Erfindung betrifft ein Trittbrett, insbesondere für ein Abfallsammelfahrzeug, mit einem Halter und einem beweglichen Teil mit einer Plattform, wobei der bewegliche Teil in eine geschlossene, eine offene und eine besetzte Position bringbar ist, indem der bewegliche Teil gegenüber dem Halter schwenkbar ist, wobei ein erstes Federelement vorgesehen ist, mit dem der bewegliche Teil in der offenen Position mittelbar oder unmittelbar in Anlage kommt.

Ein Trittbrett beziehungsweise dessen beweglicher Teil mit einer Plattform wird, wenn es nicht benötigt wird, hochgeklappt oder unter das Fahrzeug geschwenkt. Dieser Zustand ist mit der geschlossenen Position gemeint. Unter eine offenen Position wird die Position verstanden, in der das Trittbrett betriebsbereit ist. In der besetzten Position befindet sich eine Bedienperson auf dem Trittbrett.

In der offenen Position befindet sich das Trittbrett in eine Stellung nach oben geneigt zu einer Parallelebene der Aufstandsfläche des Fahrzeugs. Befindet sich eine Last auf der Plattform des Trittbretts, wird dessen beweglicher Teil gegenüber dem Halter bedingt durch die Gewichtskraft nach unten geschwenkt, bis er die besetzte Position einnimmt, in der sich die Plattform im Wesentlichen parallel zur Aufstandsfläche des Fahrzeugs befindet.

Die Position der Plattform des Trittbretts wird mit einem Drehwinkelgeber oder einer entsprechenden Messvorrichtung bestimmt.

In der offenen Position kommt der bewegliche Teil mit dem Federelement unmittelbar oder mittelbar, beispielweise über ein Zwischenelement, in Anlage. Das Federelement wirkt als Anschlag. Damit ist gewährleistet, dass sich die Plattform in der offenen Position immer in derselben Ausrichtung beziehungsweise Winkelposition befindet. Das Federelement kann entsprechend geformt und angeordnet werden.

Wird die Plattform belastet, übt der bewegliche Teil des Trittbretts eine Kraft auf das Federelement aus. Dies bewirkt eine entgegengesetzt wirkende Federkraft, so dass der bewegliche Teil durch die Belastung nicht beliebig weit geschwenkt werden kann. Dadurch wird gewährleistet, dass das Bedienpersonal nicht von der Plattform fallen kann.

Mit Hilfe der vorliegenden Erfindung sind also die einzelnen Positionen des Trittbretts präzise einstellbar und bestimmbar.

Vorteilhafterweise ist beim Schwenken des beweglichen Teils in die besetzte Position das erste Federelement spannbar.

Bevorzugt ist das erste Federelement so eingerichtet, dass bei einer vorgegebenen Belastung der Plattform der bewegliche Teil um einen vorgegebenen Winkelbereich zwischen der offenen Position und der besetzten Position schwenkbar ist. Durch die Wahl des Federelements beziehungsweise dessen Federkonstante kann eingestellt werden, wie weit die Plattform geschwenkt werden kann.

Besonders bevorzugt ist das erste Federelement so eingerichtet, dass bei einer Belastung der Plattform mit mindestens 300 Newton der bewegliche Teil um einen Winkelbereich α von 3° bis 5° zwischen der offenen Position und der besetzten Position schwenkbar ist. Insbesondere ist der bewegliche Teil unabhängig davon in dieser Weise schwenkbar unabhängig davon, an welcher Stelle die Plattform belastet wird. Damit ist sichergestellt, dass beim Betreten der Plattform durch einen erwachsenen Menschen, die Plattform in die offene Position geschwenkt wird. Gleichzeitig ist aber gewährleistet, dass die unbesetzte Plattform nicht durch eine ungewollte Bewegung etwa beim Durchfahren eines Schlaglochs in die besetzte Position schwenkt und dadurch der Fahrbetrieb gestoppt wird.

Weiterhin bevorzugt ist das Federelement so eingerichtet, dass bis zu einer Belastung mit 40 bis 50 Newton, besonders bevorzugt 45 Newton, der bewegliche Teil überhaupt nicht aus der offenen Position schwenkbar ist. Damit ist sichergestellt, dass eine Belastung mit Schmutz, Eis oder Schnee nicht dazu führt, dass die unbesetzte Plattform aus ihrer offenen Position geschwenkt wird, was im Zusammenhang mit unebenen Straßen auch zu vorbenanntem ungewollten Schwenken in die besetzte Position führen kann.

Bei alledem wird die jeweilige Position des schwenkbaren Teils des Trittbretts, also auch seiner Plattform, durch den Drehwinkelgeber bestimmt und an eine bevorzugt elektronische Steuerung weitergegeben. Je nach Position bewirkt die Steuerung Einschränkungen für den Fahrbetrieb oder hebt diese wieder auf.

In einer weiteren Ausgestaltung der Erfindung ist vorgesehen, dass der bewegliche Teil einen Vorsprung aufweist, der mit dem ersten Federelement mittelbar oder unmittelbar in Anlage kommt. Bevorzugt ist der Vorsprung hohlzylindrisch ausgeführt. Es ist vorteilhaft, wenn der bewegliche Teil so gefertigt ist, dass er wiederholbar in immer gleicher Position mit dem Federelement in Anlage kommt, so dass eine wiederholsichere Positionierung der Plattform erfolgt. Zudem kann der Vorsprung entsprechend dem vorhandenen Bauraum und der Anordnung des Federelements ausgeführt werden. Der Vorsprung kann einstückig, materialeinheitlich aus dem beweglichen Teil ausgeformt sein, es kann sich aber auch um ein zusätzliches Element handeln, das stoff-, kraft- oder formschlüssig an dem beweglichen Teil angeordnet ist.

In einer bevorzugten Ausgestaltung der Erfindung ist das erste Federelement hohlzylindrisch, insbesondere eine Spiralfeder oder ein Gummielement. Insbesondere in einer hohlzylindrischen Ausführung des Vorsprungs ist dies vorteilhaft, weil dann eine optimale Kraftübertragung möglich ist.

Vorzugsweise kommt der Vorsprung mit einer ersten endseitigen Fläche des ersten Federelements mittelbar oder unmittelbar in Anlage. Dadurch wird eine optimale Kraftübertragung und Kraftwirkung gewährleistet. Unter mittelbarer Anlage wird beispielsweise verstanden, dass zwischen dem Federelement und dem Vorsprung noch eine weitere Zwischenkomponente angeordnet ist.

Eine weitere Ausgestaltung der Erfindung sieht vor, dass das erste Federelement von einer Justierschraube durchgriffen ist. Vorzugsweise durchgreift die Justierschraube das Federelement von einer ersten endseitigen Fläche zu einer zweiten endseitigen Fläche. Das Federelement verfügt dafür vorzugsweise über eine Öffnung oder Bohrung. Im Falle einer Spiralfeder durchgreift die Justierschraube etwa den Innenraum der Spiralfeder. Die Justierschraube kann gegen das Federelement verschraubt werden, wodurch die Länge L des Federelements eingestellt wird. Damit wird der Anlagepunkt für den beweglichen Teil des Trittbretts verändert, wodurch die Position der Plattform in der offenen Position sehr einfach justiert werden kann.

Weiterhin bevorzugt ist vorgesehen, das erste Federelement mit einer zweiten endseitigen Fläche mit einer an dem Halter angeordneten Konsole mittelbar oder unmittelbar in Anlage kommt. Das Federelement kann sich somit an einer definierten Stelle das Halters abstützen, so dass die Gegenkraft auf den beweglichen Teil optimal wirken kann. Unter mittelbarer Anlage wird beispielsweise verstanden, dass zwischen dem Federelement und dem Vorsprung noch ein weiteres Zwischenelement angeordnet ist.

Die Konsole kann einstückig, materialeinheitlich aus dem Halter ausgeformt sein, es kann sich aber auch um ein separates Element handeln, das stoff-, kraft- oder formschlüssig mit dem Halter verbunden ist.

Eine weitere Ausgestaltung der Erfindung sieht vor, dass die Konsole einen Durchbruch aufweist, der von der Justierschraube durchgriffen ist. Dadurch wird bewerkstelligt, dass das Federelement in einer definierten Position zwischen dem Vorsprung des beweglichen Teils und der Konsole angeordnet ist.

Vorteilhafterweise ist die Justierschraube mittelbar oder unmittelbar gegen die Konsole verschraubbar, um eine Länge L des ersten Federelements einzustellen. Das bedeutet, dass entweder die Konsole selbst ein Gewinde aufweist, in das die Justierschraube gedreht wird, oder dass eine Mutter oder ein ähnliches Element vorgesehen ist, in das die Justierschraube gedreht wird. Dadurch ist zudem sichergestellt, dass die Längeneinstellung des Federelements nicht ungewollt verändert wird.

Weiterhin bevorzugt ist zumindest an einer der endseitigen Flächen des ersten Federelements eine Zentrierscheibe angeordnet. Die Zentrierscheibe stellt eine optimale Positionierung der einzelnen Komponenten zueinander sicher und sorgt daher für eine optimale Kraftübertragung.

Gemäß einer weiteren bevorzugten Ausgestaltung der Erfindung der ist bewegliche Teil rotationsfest mit einem drehbaren Schaft verbunden ist, der in einem Endbereich einen Magneten aufweist, der beim Schwenken gegenüber einem an dem Halter angeordneten Sensor drehbar. Durch die Drehbewegung des Schafts rotiert auf das von dem Magneten erzeugte Magnetfeld mit. Das so veränderliche Magnetfeld wird von dem Sensor detektiert. Die Messignale können wiederum mit einer Winkelposition des drehbaren Schafts und damit der Plattform korreliert werden. Dadurch ist eine hochpräzise Bestimmung der Plattformposition gegeben.

Die Positionierung der Plattform kann auch regelmäßig kalibriert werden, indem beispielsweise vor jeder Inbetriebnahme des Fahrzeugs, die Plattform in die geschlossene, offene und besetzte Position gebracht wird und das jeweilige Messignal in einer elektronischen Steuerung registriert wird. Dadurch kann Manipulationen vorgebeugt werden.

Weiterhin bevorzugt ist ein zweites Federelement mit einem ersten Ende an dem Halter und mit einem zweiten Ende an dem beweglichen Teil angeordnet, dazu eingerichtet, um den beweglichen Teil in der geschlossenen oder offenen Position zu halten. Wird der bewegliche Teil in die offene Position geklappt, so muss zunächst eine Federkraft überwunden werden, die den beweglichen Teil in der geschlossenen Position hält. Damit wird verhindert, dass der bewegliche Teil während einer Überführungsfahrt oder in einer ähnlichen Situation aufgrund von Bodenunebenheiten ungewollt in die offene oder sogar besetzte Position klappt, wodurch Beschränkungen im Fahrbetrieb ausgelöst werden. Gleiches gilt umgekehrt, wenn der bewegliche Teil sich in der offenen Position befindet.

Vorzugsweise ist das zweite Federelement eine Spiralfeder, deren Enden konisch geformt sind. Dadurch werden Belastungen der Spiralfeder in deren Enden reduziert und die Spiralfeder ist langlebiger und betriebssicherer.

In einer weiteren Ausführung der Erfindung weist der Halter ein Anschlagelement auf, das mit einer korrespondierenden Ausnehmung des beweglichen Teils in Anlage bringbar ist. Dadurch wird die Beweglichkeit des beweglichen Teils auf einen maximalen Winkelbereich begrenzt. Zwar ist die Federkonstante des Federelements so gewählt, dass bei einer üblichen Belastung mit einem üblichen Personengewicht die besetzte Position eingenommen wird. Wird aber der bewegliche Teil mit einer zu hohen Last belegt, kann das zu Schäden an der Anordnung führen. Durch das Vorsehen eines erfindungsgemäßen Anschlagelements ist diese Gefahr nicht mehr gegeben.

Die Erfindung betrifft weiterhin ein Verfahren zum Justieren eines Trittbretts wie vorstehend beschrieben mit folgenden Schritten:
- Anbringen des beweglichen Teils an dem Halter,
- Anbringen des ersten Federelements, so dass das erste Federelement auf eine vorgesehene Anfangslänge L_{A} eingestellt wird,
- Überprüfen des Winkelbereichs, um den die Plattform bei einer vorgesehenen Belastung zwischen der offenen und der besetzten Position schwenkt,
- Nachjustieren der Länge L des ersten Federelements, so dass bei einer vorgesehenen Belastung der Plattform der bewegliche Teil um einen vorgegebenen Winkelbereich schwenkt.

Durch die Einstellung des ersten Federelements auf eine Anfangslänge L_{A} wird das Federelement vorgespannt. Die Anfangslänge L_{A} des ersten Federelements kann durch Erfahrungswerte festgelegt werden. Auch wenn Federelemente stets identisch hergestellt werden, unterliegen sie doch Fertigungstoleranzen, genauso wie der Halter und der bewegliche Teil. Die Anfangslänge L_{A} wird daher so gewählt, dass sich die Plattform des Trittbretts in der offenen Position ein wenig nach oben geneigt zu einer Parallelebene zur Aufstandsfläche des Fahrzeugs befindet. Dann wird die Plattform mit einem vorgegebenen Gewicht belastet, das zu einem Schwenken um einem vorgegebenen Winkelbereich führen soll, so dass sich die Plattform in einer Stellung im Wesentlichen parallel zu der Aufstandsfläche des Fahrzeugs in der besetzten Position befindet. Wenn dieser vorgegebene Winkelbereich nicht gegeben ist, wird die Länge L des ersten Federelements so lange verändert, bis die vorgesehene Schwenkbewegung gegeben ist. Abschließend wird die so eingestellte Länge L fixiert. Damit ist ein sehr einfaches Verfahren gegeben, um eine Trittbrettanordnung entsprechend der vorgegebenen Positionen zu justieren, wobei mit dieser Anordnung zudem die Positionen selbst wiederholsicher und hoch genau eingenommen werden können.

Eine besondere Ausführungsform sieht vor, dass das erste Federelement mit einer das Federelement durchgreifenden Justierschraube angebracht wird. Die Justierschraube wird gegen das Federelement geschraubt und so in einfacher Weise dessen Länge L eingestellt.

Bevorzugt ist vorgesehen, dass die Länge L des ersten Federelements durch ein mittelbares oder unmittelbares Verschrauben der Justierschraube gegenüber einer Konsole eingestellt wird, wobei das Federelement mit einer ersten endseitigen Fläche mit dem Kopf der Justierschraube und mit einer zweiten endseitigen Fläche mit der Konsole mittelbar oder unmittelbar in Anlage kommt. In dieser Anordnung wird das Federelement zusätzlich zwischen dem Kopf der Justierschraube und der Konsole eingeklemmt, was zu einer präzisen Positionierung, Vorspannung der Feder und optimalen Kraftübertragung führt. Die Justierschraube wird entweder unmittelbar in ein Gewinde der Konsole oder mittelbar in eine Mutter oder ähnliches eingeschraubt. Dadurch ist es einerseits einfach, die Länge L des Federelements einzustellen. Gleichzeitig ist sichergestellt, dass die Anordnung nicht ungewollt verändert wird.

Weitere Merkmale der Erfindung ergeben sich aus den nachfolgenden Zeichnungen. Es zeigen:
- Figur 1:: ein Trittbrett in einer offenen Position,
- Figur 2:: ein Trittbrett in einer geschlossenen Position,
- Figur 3:: ein Trittbrett in Seitenansicht,
- Figur 4:: eine partielle Schnittdarstellung des Justagemechanismus,
- Figur 5:: ein Trittbrett in einer perspektivischen Darstellung,
- Figur 6:: ein Trittbrett in einer Explosionsdarstellung,
- Figur 7:: eine Querschnittsdarstellung.

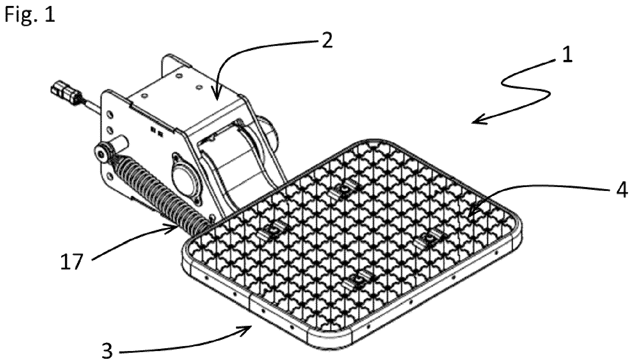

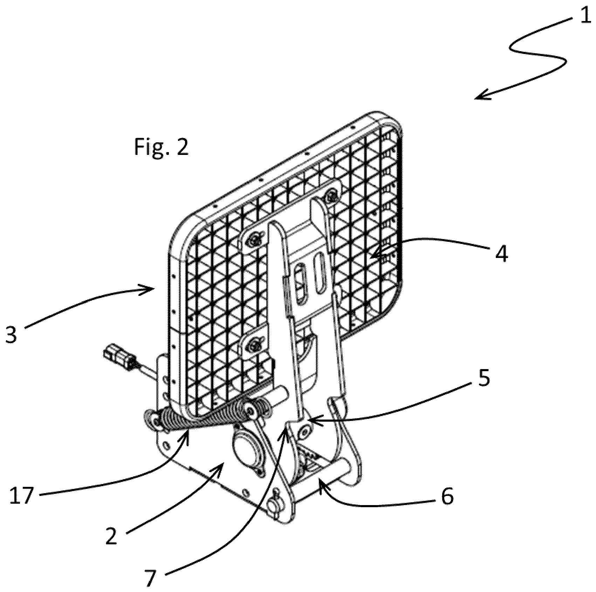

Ein erfindungsgemäßes Trittbrett 1 ist in den Figuren 1 und 2 dargestellt. Das Trittbrett 1 umfasst einen Halter 2 und ein bewegliches Teil 3. An dem beweglichen Teil 3 ist eine Plattform 4 angeordnet, auf der das Bedienpersonal stehen kann. Der bewegliche Teil 3 ist an einem drehbaren Schaft 5 rotationsfest befestigt. Dadurch kann der bewegliche Teil 3 von einer heruntergeklappten, offenen Position (Fig. 1) in eine hochgeklappte, geschlossene Position (Fig. 2) und umgekehrt bewegt werden.

Diese Bewegung kann manuell, durch Muskelkraft erfolgen oder durch einen Motor, beispielsweise einen Elektromotor, mit Getriebe bewerkstelligt werden.

In der offenen Position kann die Plattform 4 von einer Bedienperson eines Abfallsammelfahrzeugs betreten werden und die Bedienperson kann auf der Plattform 4 mitfahren, was insbesondere im Entleerbetrieb zweckmäßig ist, da dort kurze Strecken in langsamem Tempo zurückgelegt werden. Denn bei besetztem Trittbrett 1 wird der Fahrbetrieb limitiert, indem keine Rückwärtsfahrt möglich ist und die Vorwärtsfahrt auf eine Maximalgeschwindigkeit beschränkt wird. Dies dient der Sicherheit des Bedienpersonals.

Es ist daher wichtig, dass das Betreten der Plattform 4 wiederholsicher durch eine Steuerung des Fahrzeugs registriert wird, so dass die entsprechenden Beschränkungen aktiviert werden können.

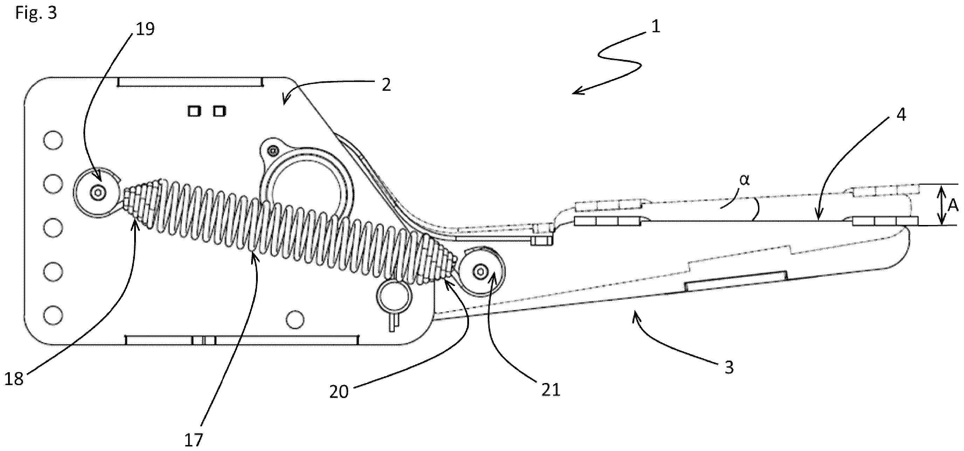

Das Trittbrett 1 ist in Fig. 3 in einer Seitendarstellung gezeigt. In gestrichelten Linien ist der bewegliche Teil 3 in der offenen Position gezeichnet, die durchgehenden Linien zeigen die besetzte Position des beweglichen Teils 3, wenn nämlich eine Last auf diesen wirkt. In der besetzten Position ist die Plattform 4 im Wesentlichen parallel zur Aufstandsfläche des Fahrzeugs ausgerichtet, so dass die darauf befindliche Bedienperson nicht von der Plattform 4 stürzen kann.

Der Winkelbereich α des beweglichen Teils 3 zwischen der offenen und der besetzten Position beträgt 5° bei einer Mindestlast von 300 Newton. Damit bei einer stark überhöhten Last der bewegliche Teil 3 nicht zu weit gedreht werden kann und dabei das Trittbrett 1 beschädigt wird, ist ein Anschlagelement 6 an dem Halter 2 vorgesehen, das mit einer korrespondierenden Ausnehmung 7 an dem beweglichen Teil 3 in Anlage kommt, so dass die Drehbewegung des beweglichen Teils 3 begrenzt wird.

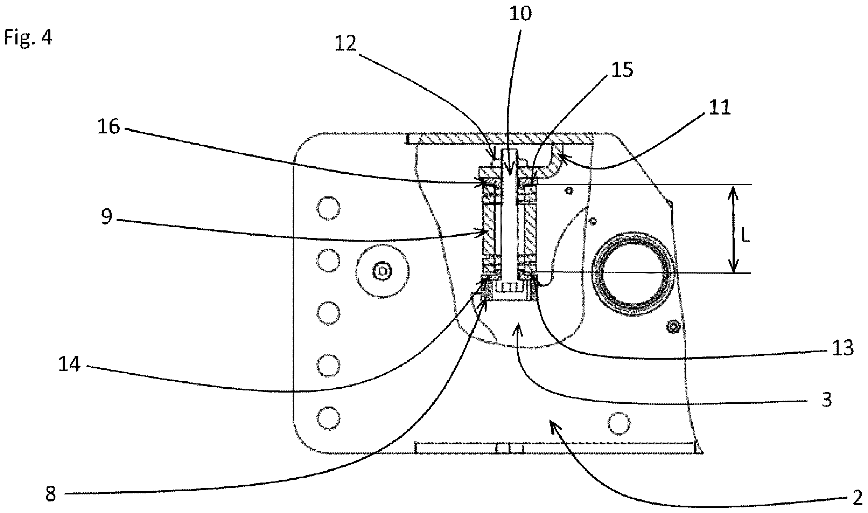

Der Mechanismus, der die Winkelposition des beweglichen Teils 3 gegenüber dem Halter 2 festlegt, ist in Fig. 4 im Detail dargestellt. Dort wird in einem Aufriss des Halters 3 die entsprechende Anordnung im Querschnitt gezeigt. Der bewegliche Teil 3 weist einen hohlzylindrischen Vorsprung 8 auf. Dieser auch Federstößel genannte Vorsprung 8 ist ein zusätzliches, separates Bauteil, das schweißtechnisch an dem beweglichen Teil 3 festgelegt ist. Der Vorsprung 8 kommt bei der Drehbewegung in die offene Position mit einer Federanordnung in Anlage, was die Drehbewegung begrenzt und somit die offene Position festlegt. Die Federanordnung besteht im Kern aus einem, hier als Spiralfeder ausgeführten, ersten Federelement 9. Dieses ist von einer Justierschraube 10 durchgriffen und mit dieser an einer an dem Halter 2 angeordneten Konsole 11 verschraubt. Die Justierschraube 10 durchgreift dabei eine Ausnehmung der Konsole 11 und wird mit einer Kontermutter 12 fixiert. Das Federelement ist in Fig. 4 aus pragmatischen Gründen nicht realistisch als Spiralfeder dargestellt, sondern es wurde ein Platzhalterelement verwendet, was aber den Offenbarungsgehalt der Fig. 4 nicht beschränken soll.

Der Vorsprung 8 kommt mit einer ersten endseitigen Fläche 13 des ersten Federelements 9 mittelbar in Anlage, da zwischen dem Federelement 9 und dem Vorsprung 8 noch eine Zentrierscheibe 14 angeordnet ist. Der Kopf der Justierschraube 10 taucht dabei in den Innenraum des hohlzylindrischen Vorsprungs 8 ein, so dass die Kraft, die der bewegliche Teil 3 auf die Federanordnung ausübt, direkt auf das erste Federelement 9 übertragen wird, das dadurch gespannt wird.

Das erste Federelement 9 kommt mit einer zweiten endseitigen Fläche 15 mittelbar mit der Konsole 11 in Anlage, wobei auch hier eine Zentrierscheibe 16 angeordnet ist. Die Zentrierscheiben 14,16 haben den Zweck, das erste Federelement 9 genau auszurichten, so dass eine darauf ausgeübte Kraft die Länge L des Federelements 9 verkürzt, ohne dass dieses aus seiner longitudinalen Position gedrückt wird, so dass die Kraft optimal auf das erste Federelement 9 übertragen wird.

Die Federkonstante und die Geometrie des Federelements 9 ist darauf ausgelegt, dass die Länge des Federelements bei einer vorgegebenen Belastung der Plattform 4 um einen bestimmten Betrag verkürzt, so dass der bewegliche Teil 3 um einen vorgegebenen Winkelbereich α dreht. In dieser Ausführung der Erfindung ist vorgesehen, dass bei einer Belastung der Plattform 4 mit 300 Newton, unabhängig vom genauen Ort der Belastung auf der Plattform 4, der bewegliche Teil 3 um einen Winkelbereich α von im Wesentlichen 5° zwischen der offenen Position und der besetzten Position schwenkbar ist. Betrachtet man den Abstand zwischen äußeren Kante der Oberfläche der Plattform 4 und der Aufstandsfläche des Fahrzeugs, dann bedeutet das, dass die Abstandsdifferenz A von der offenen zur besetzten Position in der gezeigten Ausführung etwa 30 Millimeter beträgt (siehe Fig. 3). Mit anderen Worten bewegt sich die äußere Kante der Plattform 4 bei einer Belastung von 300 Newton um etwa 30 Millimeter nach unten.

Grundsätzlich hängt die genaue Größe der Abstandsdifferenz A von dem gewünschten Winkel oder Winkelbereich α und der Geometrie der Plattform 4 und des beweglichen Teils 3 ab. Dabei ist zu beachten, dass der Winkel α, und damit auch die Abstandsdifferenz A, nicht zu groß sein soll, um dem Bedienpersonal komfortables Auf- und Absteigen zu ermöglichen. Im Allgemeinen beträgt A bevorzugt zwischen 20 und 40 Millimeter.

Mit jeder größeren Belastung, also etwa einer Person mit höherem Gewicht, wird der bewegliche Teil 3 weiter als nur 5° gedreht. Eine Steuerung interpretiert eine Winkelposition des beweglichen Teils 3, in der dieser 5° oder mehr gegenüber der offenen Position gedreht ist als besetzte Position mit entsprechenden Fahreinschränkungen. Bei geringerer Belastung, etwa weil jemand gegen den beweglichen Teil 3 stößt oder bei der Fahrt der unbesetzte bewegliche Teil 3 wegen einer Bodenunebenheit schwenkt, und einer demzufolge geringeren Drehung, wird dies nicht als besetzte Position interpretiert.

Damit ist es möglich aus der Winkelposition des beweglichen Teils 3 die geschlossene, offene und besetzte Position des Trittbretts genau und wiederholbar zu bestimmen.

Bei einem erfindungsgemäßen Verfahren zum Justieren eines solchen wird zunächst der bewegliche Teil 3 an dem Halter 2 angebracht.

Danach wird vorzugsweise ein hier als Spiralfeder ausgestaltetes zweites Federelement 17 an dem Trittbrett 1 befestigt, gut zu erkennen in Fig. 3. Mit seinem ersten Ende 18 wird das zweite Federelement 17 an dem Halter 1 an einem ersten Anbindungspunkt 19 befestigt. Mit seinem zweiten Ende 20 wird das zweite Federelement 17 an dem Halter 1 an einem zweiten Anbindungspunkt 21 befestigt. Das zweite Federelement 17 hat die Aufgabe, den beweglichen Teil 3 in der geschlossenen Position zu halten, so dass dieser während einer Fahrt nicht ungewollt in die offene Position schwenken kann, und umgekehrt.

Die Enden 18,20 des zweiten Federelements 17 sind konisch geformt, um zu große Belastung im Dauerbetrieb und damit übermäßigen Verschleiß zu vermeiden.

Das erste Federelement 9 wird angeordnet, indem es mit der Justierschraube 10 und der Kontermutter 12 gegen die Konsole 11 geschraubt wird. Dabei wird an den Enden des ersten Federelements 9 jeweils eine Zentrierscheibe 14,16 angeordnet.

Das erste Federelement 9 wird auf eine vorgesehene Anfangslänge L_{A} eingestellt, die in diesem Ausführungsbeispiel 56 Millimeter beträgt. Nachfolgend wird die Plattform 4 mit einer Kraft von 300 Newton belastet und überprüft, um welchen Winkel α der bewegliche Teil 3 nach unten schwenkt. Dieser Winkelbereich soll 5° betragen.

Wenn die Einstellung noch nicht passt, wird durch Drehen der Justierschraube 10 die Länge L des ersten Federelements 9 nachjustiert, bis der korrekte Winkelbereich eingestellt ist, und schließlich die Kontermutter 12 festgezogen.

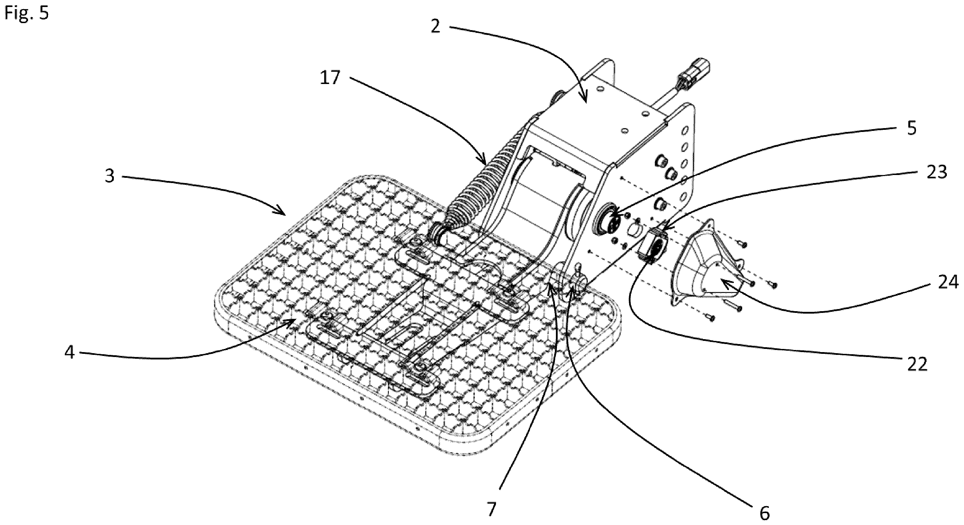

Um einer Steuerung für das Abfallsammelfahrzeug die Winkelposition des beweglichen Teils 3 zu übermitteln, muss die Winkelposition zunächst bestimmt werden. Dafür ist in einem Endbereich des Schafts 5 ein Magnet 22 angeordnet (Fig. 5, 6 und 7). Beim Schwenken des beweglichen Teils 3 wird auch das von dem Magneten 22 erzeugte Magnetfeld gedreht. Diese Magnetfeldänderung kann mittels eines Sensors 23, der unverschieblich an dem Halter 2 gegenüber dem Schaft 5 und dem Magneten 22 angeordnet ist, bestimmt werden. Die dadurch ermittelte Winkelposition des beweglichen Teils 3 wird an eine Steuerung übermittelt, die dann die weiteren Einstellungen an dem Abfallsammelfahrzeug vornimmt. Die Sensormessung wird vor Betriebsbeginn oder auch zu beliebigen Zeitpunkten während des Betriebs kalibriert, indem die Positionen des Trittbretts 1 mit Messsignalen korreliert werden.

Der Sensor 23 wird von einer Sensorabdeckung 24 geschützt, um Manipulationen an der Position des Sensors 23 vorzubeugen.

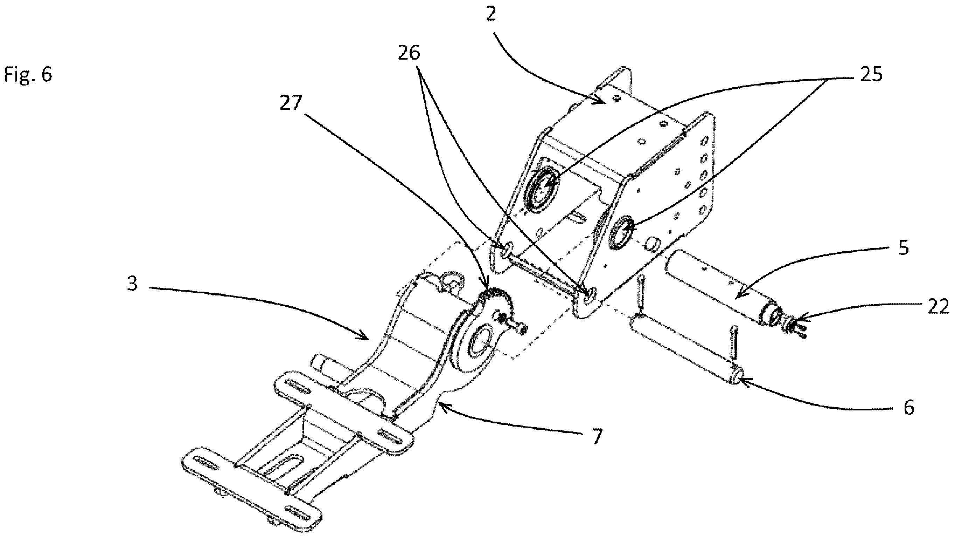

In der Explosionsdarstellung in Fig. 6 sind die einzelnen Komponenten des Trittbretts 1 noch einmal einzeln gezeigt. Der Schaft 5 ist in korrespondierenden Durchbrüchen 25 der Seitenwände des Halters angeordnet. Auch für das Anschlagelement 6 sind entsprechende Durchbrüche 26 vorgesehen.

Hier ist auch das Zahnrad 27 zu sehen, mit dem bei einem motorgetriebenen Trittbrett 1 das Drehmoment eines Elektromotors auf das bewegliche Teil 3 übertragen wird. Das Zahnrad 27 ist rotationsfest mit dem beweglichen Teil 3 verbunden und mit einem hier nicht dargestellten Antriebszahnrad verzahnt.

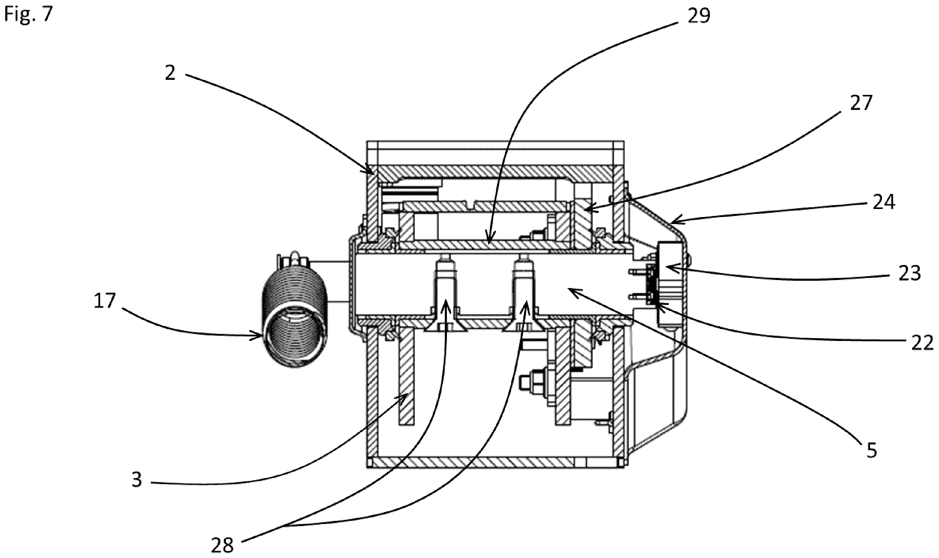

In Fig. 7 ist der Zusammenbau im Bereich des Schafts 5 nochmals in einem Querschnitt gezeigt. Der Magnet 22 ist in einer Tasche in dem Schaft 5 aufgenommen. Der Schaft 5 und der Sensor 23 sind mit minimal möglichem Abstand zueinander angeordnet, um eine optimale Detektion der Winkelposition zu ermöglichen. Der Schaft ist mit zwei Bolzen 28 in einer Hülse 29 angeordnet, an der auch das Zahnrad 27 befestigt ist.

Mittels dieser Detektionsanordnung ist es möglich die vorgesehenen Positionen eines erfindungsgemäßen Trittbretts 1, insbesondere die besetzte und die offene Position, wiederholsicher und präzise zu bestimmen und diese Positionen genau einzustellen.

### Bezugszeichen

- 1: Trittbrett
- 2: Halter
- 3: bewegliches Teil
- 4: Plattform
- 5: Schaft
- 6: Anschlagelement
- 7: Ausnehmung
- 8: Vorsprung
- 9: erstes Federelement
- 10: Justierschraube
- 11: Konsole
- 12: Kontermutter
- 13: erste endseitige Fläche
- 14: Zentrierscheibe
- 15: zweite endseitige Fläche
- 16: Zentrierscheibe
- 17: zweites Federelement
- 18: erstes Ende von 17
- 19: erster Anbindungspunkt für 17
- 20: zweites Ende von 17
- 21: zweiter Anbindungspunkt für 17
- 22: Magnet
- 23: Sensor
- 24: Sensorabdeckung
- 25: Durchbruch für 5
- 26: Durchbruch für 6
- 27: Zahnrad
- 28: Bolzen
- 29: Hülse
- A: Abstand
- L: Länge
- L_{A}: Anfangslänge
- α: Winkelbereich

## Patentansprüche

1. Trittbrett (1), insbesondere für ein Abfallsammelfahrzeug, mit einem Halter (2) und einem beweglichen Teil (3) mit einer Plattform (4), wobei der bewegliche Teil (3) in eine geschlossene, eine offene und eine besetzte Position bringbar ist, indem der bewegliche Teil (3) gegenüber dem Halter (2) schwenkbar ist, **dadurch gekennzeichnet, dass** ein erstes Federelement (9) vorgesehen ist, mit dem der bewegliche Teil (3) in der offenen Position mittelbar oder unmittelbar in Anlage kommt.

2. Trittbrett (1) nach Anspruch 1 **dadurch gekennzeichnet, dass** beim Schwenken des beweglichen Teils (3) in die besetzte Position das erste Federelement (9) spannbar ist.

3. Trittbrett (1) nach Anspruch 2 **dadurch gekennzeichnet, dass** das erste Federelement (9) so eingerichtet ist, dass bei einer vorgegebenen Belastung der Plattform (4) der bewegliche Teil (3) um einen vorgegebenen Winkelbereich zwischen der offenen Position und der besetzten Position schwenkbar ist.

4. Trittbrett (1) nach Anspruch 3 **dadurch gekennzeichnet, dass** das erste Federelement (9) so eingerichtet ist, dass bei einer Belastung der Plattform (4) mit mindestens 300 Newton der bewegliche Teil (3) um einen Winkelbereich α von 3° bis 5° zwischen der offenen Position und der besetzten Position schwenkbar ist.

5. Trittbrett (1) nach zumindest einem der vorstehenden Ansprüche **dadurch gekennzeichnet, dass** der bewegliche Teil (3) einen Vorsprung (8) aufweist, der mit dem ersten Federelement (9) mittelbar oder unmittelbar in Anlage kommt.

6. Trittbrett (1) nach zumindest einem der vorstehenden Ansprüche **dadurch gekennzeichnet, dass** das erste Federelement (9) hohlzylindrisch, insbesondere eine Spiralfeder oder ein Gummielement, ist.

7. Trittbrett (1) nach zumindest Anspruch 5 oder 6 **dadurch gekennzeichnet, dass** der Vorsprung (8) mit einer ersten endseitigen Fläche (13) des ersten Federelements (9) mittelbar oder unmittelbar in Anlage kommt.

8. Trittbrett (1) nach zumindest einem der vorstehenden Ansprüche **dadurch gekennzeichnet, dass** das erste Federelement (9) von einer Justierschraube (10) durchgriffen ist.

9. Trittbrett (1) nach Anspruch zumindest einem der vorstehenden Ansprüche **dadurch gekennzeichnet, dass** das erste Federelement (9) mit einer zweiten endseitigen Fläche (15) mit einer an dem Halter (2) angeordneten Konsole (11) mittelbar oder unmittelbar in Anlage kommt.

10. Trittbrett (1) nach Anspruch 9 **dadurch gekennzeichnet, dass** die Konsole (11) einen Durchbruch aufweist, der von der Justierschraube (10) durchgriffen ist.

11. Trittbrett (1) nach Anspruch 9 oder 10 **dadurch gekennzeichnet, dass** die Justierschraube (10) mittelbar oder unmittelbar gegen die Konsole (11) verschraubbar ist, um eine Länge L des ersten Federelements (9) einzustellen.

12. Trittbrett (1) nach zumindest einem der vorstehenden Ansprüche **dadurch gekennzeichnet, dass** der bewegliche Teil (3) rotationsfest mit einem drehbaren Schaft (5) verbunden ist, der in einem Endbereich einen Magneten (22) aufweist, der beim Schwenken gegenüber einem an dem Halter (2) angeordneten Sensor (23) drehbar ist.

13. Verfahren zum Justieren eines Trittbretts (1) nach einem der vorstehenden Ansprüche mit folgenden Schritten:
• Anbringen des beweglichen Teils (3) an dem Halter (2),
• Anbringen des ersten Federelements (9), so dass das erste Federelement (9) auf eine vorgesehene Anfangslänge L_{A} eingestellt wird,
• Überprüfen des Winkelbereichs α, um den die Plattform (4) bei einer vorgesehenen Belastung zwischen der offenen und der besetzten Position schwenkt,
• Nachjustieren der Länge L des ersten Federelements (9), so dass bei einer vorgesehenen Belastung der Plattform (4) der bewegliche Teil (3) um einen vorgegebenen Winkelbereich α schwenkt.

14. Verfahren nach Anspruch 13 **dadurch gekennzeichnet, dass** das erste Federelement (9) mit einer das Federelement (9) durchgreifenden Justierschraube (10) angebracht wird.

15. Verfahren nach Anspruch 14 **dadurch gekennzeichnet, dass** die Länge L des ersten Federelements (9) durch ein mittelbares oder unmittelbares Verschrauben der Justierschraube (10) gegenüber einer Konsole (11) eingestellt wird, wobei das Federelement (9) mit einer ersten endseitigen Fläche (13) mit dem Kopf der Justierschraube (10) und mit einer zweiten endseitigen Fläche (15) mit der Konsole (11) mittelbar oder unmittelbar in Anlage kommt.
